Europäisches Patentamt

European Patent Office

Office européen des brevets

(19)

(11) Veröffentlichungsnummer: **0 306 632**
**B1**

(12) **EUROPÄISCHE PATENTSCHRIFT**

(45) Veröffentlichungstag der Patentschrift:
05.09.90

(51) Int. Cl.⁵: **F16K 31/383**

(21) Anmeldenummer: 88109480.9

(22) Anmeldetag: 14.06.88

(54) Schaltventil mit hydraulischer Selbsthaltung.

(30) Priorität: 07.09.87 DE 3729961

(43) Veröffentlichungstag der Anmeldung:
15.03.89 Patentblatt 89/11

(45) Bekanntmachung des Hinweises auf die Patenterteilung:
05.09.90 Patentblatt 90/36

(84) Benannte Vertragsstaaten:
AT BE CH DE ES FR GB GR IT LI LU NL SE

(56) Entgegenhaltungen:
DE-A- 1 498 280
DE-A- 2 133 936
DE-B- 1 254 925
DE-C- 3 433 535
US-A- 4 545 401

HYDRAULICS AND PNEUMATICS, Band 4, Nr.4,
April 1986; THE INDUSTRIAL PUBLISHING
CORPORATION

(73) Patentinhaber: HEILMEIER & WEINLEIN Fabrik für
Oel-Hydraulik GmbH & Co. KG, Neumarkter Strasse 26,
D-8000 München 80(DE)

(72) Erfinder: Klemens, Harald, Arno-Assmann-Strasse 11,
D-8000 München 82(DE)

(74) Vertreter: Patentanwälte Grünecker, Kinkeldey,
Stockmair & Partner, Maximilianstrasse 58,
D-8000 München 22(DE)

## Beschreibung

Die Erfindung betrifft ein Schaltventil der im Oberbegriff des Patentanspruches 1 angegebenen Art.

Bei einem aus der DE-C 3 433 535 bekannten Schaltventil dieser Art wird die Überströmverbindung vom Druckanschluß zur Ringkammer von in den Kolbenteil eingeformten Strömungstaschen gebildet, die in Abhängigkeit vom Hub des Differentialkolbens die Verbindung zur Ringkammer zunehmend öffnen, sobald der Schließkolbenteil in Absperrichtung verschoben wird. Umgekehrt sperren die Strömungstaschen die Verbindung, sobald der Schließkolbenteil in die Durchgangsstellung verschoben wird, bzw. vor- oder nacheilend dazu. Die Strömungstaschen arbeiten zu diesem Zweck mit einer Steuerkante in der Ringkammer zusammen. Auf die Zusammenarbeit der Strömungstaschen mit der Steuerkante ist auch die Zusammenarbeit des Auslasses des Entlastungskanals mit einer Steuerkante im Ende des ersten Abschnitts der Stufenbohrung abgestimmt, derart, daß der Entlastungskanal gleichzeitig oder nacheilend zur Verbindung des Druckanschlusses mit der Ringkammer freigebbar ist. Die dafür erforderliche, exakte Abstimmung zwischen den Strömungstaschen und ihrer Steuerkante einerseits und dem Auslaß des Entlastungskanals und dessen Steuerkante andererseits bereitet herstellungstechnisch Probleme. Bereits kleine Fertigungsungenauigkeiten beeinträchtigen den erforderlichen nachdrücklichen Umschaltimpuls des Schaltventils. Solche Fertigungsungenauigkeiten nachträglich im Hinblick auf ein einwandfreies Schaltverhalten des Schaltventils zu beheben, ist praktisch nahezu unmöglich. Die Fertigungspräzision soweit zu steigern, daß die Fertigungsungenauigkeiten diesen Nachteil nicht hervorrufen können, ist mit außerordentlich hohem Aufwand verbunden.

Aus der DE-A 1 498 280 ist ein Stromregelventil bekannt, bei dem eine Ringfläche des Differentialkolbens über einen ständig offenen Kanal vom Druckeinlaß her beaufschlagt wird, um in einer Schaltrichtung eine zusätzliche Kraft am Differentialkolben zu erzeugen. In der Gegenschaltrichtung des Differentialkolbens kann das die Ringfläche beaufschlagende Druckmittel nicht rasch genug abströmen, so daß hier eine verzögerte und langsame Schaltbewegung eintritt, die für ein Schaltventil der eingangs genannten Art nicht zulässig ist.

Das gleiche gilt für ein aus der Zeitschrift Hydraulics und Pneumatics, April 1961, Seite 75, Fig.18, bekanntes Entlastungsventil, bei dem in einer Ringkammer eine Ringfläche des Differentialkolbens mit einem vom Druckeinlaß abgeleiteten Steuerdruck beaufschlagt wird, um in einer Schaltrichtung eine zusätzliche Kraft am Differentialkolben zu erzeugen. In der umgekehrten Schaltrichtung des Differentialkolbens kann die Ringkammer jedoch nicht ausreichend schnell entlastet werden, so daß sich hier kein nachdrücklicher Schaltimpuls erreichen und deshalb dieses Ventil nicht als Schaltventil der eingangs genannten Art einsetzen läßt.

Aus der DE-B 1 254 925 ist ein Zweistufen-Überdruckventil bekannt, bei dem zum Erzielen eines nachdrücklichen Öffnungshubes bei großer Fördermenge am Druckeinlaß und um den Leerlaufdruck niedrig zu halten, eine Überströmverbindung vom Druckeinlaß zu einer Ringkammer vorgesehen ist, in der eine Drosselstelle angeordnet ist. Dieser Überströmkanal ist jedoch nicht ständig offen, sondern wird in Abhängigkeit von der Hubstellung des Differentialkolbens freigegeben. In der anderen Schaltrichtung des Differentialkolbens ergibt sich damit eine sehr langsame Schaltbewegung, weil die Ringkammer nur langsam druckentlastet werden kann, so daß auch dieses Ventil nicht als Schaltventil in der eingangs genannten Art verwendbar ist.

Der Erfindung liegt die Aufgabe zugrunde, ein Schaltventil der eingangs genannten Art zu schaffen, bei dem der nachdrückliche Schaltimpuls für den Differentialkolben in beiden Schaltrichtungen trotz fertigungsbedingter, unvermeidlicher Ungenauigkeiten sichergestellt ist, bzw. bei dem ein aufgrund Fertigungsungenauigkeiten beeinträchtigtes Schaltverhalten nachträglich mit geringem Aufwand korrigiert werden kann.

Die gestellte Aufgabe wird erfindungsgemäß durch die im kennzeichnenden Teil des Patentanspruches 1 angegebene Merkmale gelöst.

Bei dieser Ausbildung entfällt die beim eingangs erwähnten, bekannten Schaltventil sehr mühsame Abstimmung des Öffnens und des Absperrens der Überströmverbindung vom Druckeinlaß zur Ringkammer, weil die Überströmverbindung ein ständig offener Kanal ist. Dies bringt fertigungstechnisch erhebliche Vorteile, weil die Abstimmung der Freigabe des Entlastungskanals auf den Hub des Differentialkolbens allein fertigungstechnisch einfach durchführbar ist. Die Präzision, die bei der Herstellung des Schaltventils bzw. der Herstellung seiner einzelnen Komponenten aufgewendet werden muß, hält sich im Rahmen des üblichen. Sollte aufgrund einer Fertigungsungenauigkeit das Schaltverhalten des Schaltventils beeinträchtigt sein, so läßt sich dies auf einfachem Weg auch nachträglich durch die alleinige Abstimmung der Freigabe des Entlastungskanals beheben. Die Ringkammer steht ständig unter dem Druck am Druckeinlaß. Da jedoch der Durchgangsquerschnitt des Kanals zur Ringkammer kleiner ist als der Durchgangsquerschnitt des Entlastungskanals, wird die Ringkammer sofort entlastet, sobald der Entlastungskanal freigegeben ist, wodurch der nachdrückliche Schaltimpuls des Differentialkolbens eintritt. In der Gegenrichtung wirkt bei abgesperrtem Entlastungskanal der Druck in der Ringkammer in der gleichen Richtung wie die den Schließkolbenteil beaufschlagende Feder, so daß diese beiden Kräfte den Gegendruck in der Steuerkammer des Steuerkolbenteils schlagartig zu überwinden vermögen, was zu einer nachdrücklichen Schaltbewegung auch in dieser Schaltrichtung führt.

Baulich einfach ist die Ausführungsform von Anspruch 2, weil der Kanal mit dem gewünschten Querschnitt problemlos schon bei der Herstellung des Gehäuses vorgesehen werden kann.

Alternativ dazu ist auch die Ausführungsform von Anspruch 3 zweckmäßig, weil mittels der Zylinderhülse, die präzise bearbeitet werden kann, die Herstellung des Gehäuses vereinfacht wird.

Eine weitere, alternative Ausführungsform geht aus Anspruch 4 hervor. Da der Differentialkolben ohnedies sehr sorgfältig bearbeitet wird, bereitet es kein Problem, den Kanal von vorneherein auch schon in den Kolbenteil hineinzuverlegen.

Wichtig ist ferner die Ausführungsform von Anspruch 5, weil dadurch die hubabhängige Auf- oder Zusteuerung des Entlastungskanals erreicht wird und für das Druckmittel aus der Ringkammer eine rasche Druckentlastung sichergestellt ist.

Herstellungstechnisch ist dabei auch die Ausführungsform von Anspruch 6 zweckmäßig, weil eine solche umlaufende Erweiterung bei der Gehäuseausbildung bzw. bei der Herstellung der Zylinderhülse einfach vorgesehen werden kann.

Wichtig ist auch das Merkmal von Anspruch 7, weil das Rückschlagventil in der Druckleitung verhindert, daß bei absinkendem Druck am Druckeinlaß der Systemdruck auf der Verbraucherseite unzulässig weit absinkt.

Das Schaltventil eignet sich besonders zur Versorgung eines hydaulichen Verbraucherkreises aus einer Druckquelle, wobei im Verbraucherkreis ein zwischen einer oberen und einer unteren Druckgrenze schwankender Druck unbedingt eingehalten werden muß und wobei Druckschwankungen im Verbraucherkreis verhältnismäßig langsam von statten gehen. Diese langsamen Druckschwankungen sind nämlich insofern kritisch, als das zur Versorgung des Verbraucherkreises vorgesehene Schaltventil bei sehr langsamen Druckabfall oder Druckanstieg im Verbraucherkreis die Tendenz hat, sich an einen Schaltzustand "anzuschleichen", der undefiniert ist, und bei dem das aus der Druckquelle kommende Druckmittel sehr stark gedrosselt und dadurch erwärmt und mechanisch belastet wird.

Anhand der Zeichnung werden Ausführungsformen des Erfindungsgegenstandes erläutert. Es zeigen:

Fig. 1 einen Längsschnitt durch eine schematische Ausführungsform eines Schaltventils,
Fig. 2 einen Längsschnitt durch einen Teil einer weiteren Ausführungsform,
Fig. 3 einen Detail-Längsschnitt durch zwei Ausbildungsvarianten, und
Fig. 4 einen Detaillängsschnitt durch eine weitere Ausführungsvariante.

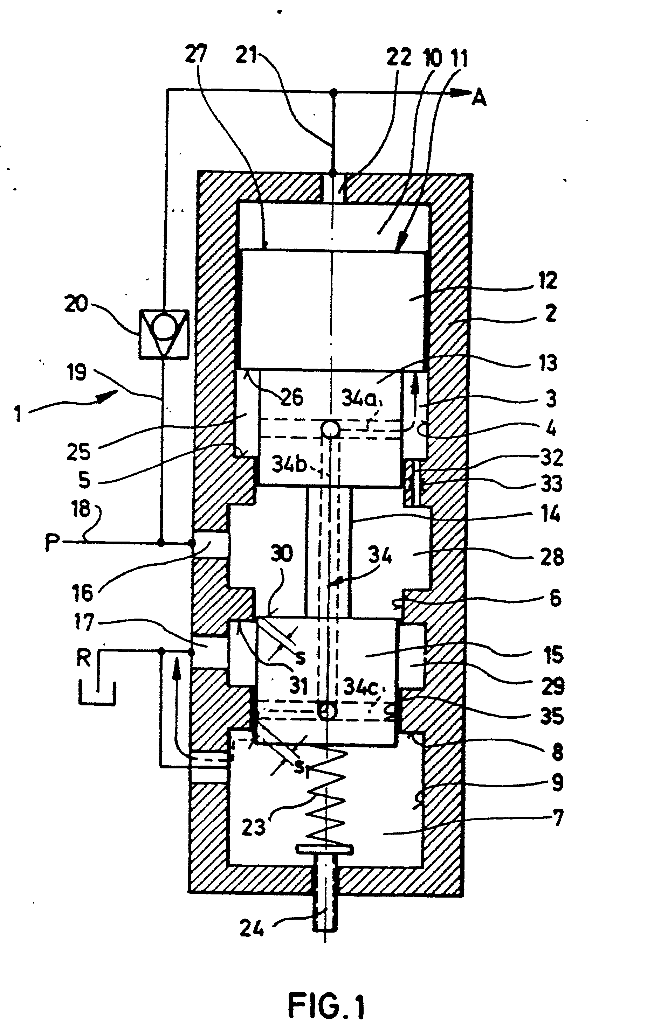

Ein Schaltventil 1 gemäß Fig.1 weist ein Gehäuse 2 mit einer längs durchgehenden Stufenbohrung 3 auf. Die Stufenbohrung besitzt einen großdurchmessrigen zweiten Abschnitt 4, der über eine Ringschulter 5 in einen kleindurchmessrigen ersten Abschnitt 6 übergeht. Der kleindurchmessrige erste Abschnitt 6 ist bei dieser Ausführungsform über eine Ringschulter 8 an seinem dem zweiten Abschnitt 4 abgewandten Ende 7 mit einer Erweiterung 9 versehen.

Am gegenüberliegenden Ende des zweiten Abschnitts 4 ist eine Steuerkammer 10 vorgesehen. In der Stufenbohrung 3 ist ein Differentialkolben 11 verschiebbar, der in der Steuerkammer 10 einen großdurchmessrigen Steuerkolbenteil 12 aufweist, an dem sich ein mit kleinerem Durchmesser fortsetzender und in den ersten Abschnitt 6 reichender Kolbenteil 13 anschließt. Über eine Eindrehung 14 setzt sich der Kolbenteil 13 in einem Schließkolbenteil 15 fort, der bis in das Ende 7 der Stufenbohrung 3 ragt. Der Differentialkolben 11 ist in der Stufenbohrung 3 hin- und herschiebbar geführt. In den ersten Abschnitt 6 münden radial ein Druckanschluß 16 sowie ein axial dazu versetzter, radialer Druckauslaß 17. Dem Druckeinlaß 16 und dem Druckauslaß 17 sind umlaufende Erweiterungen 28 und 29 in der Bohrungswand zugeordnet. Zum Druckeinlaß 16 führt eine Druckleitung 18, die beispielsweise an eine Pumpe P angeschlossen ist. Von dieser Druckleitung 18 zweigt eine Druckleitung 19 zu einem Verbraucher A ab, wobei in der Druckleitung 19 ein zum Druckanschluß 16 hin sperrendes Rückschlagventil 20 angeordnet ist. In Strömungsrichtung stromab des Rückschlagventils 20 führt ein Steuerkanal 21 von der Druckleitung 19 zu einem Einlaß 22 zur Steuerkammer 10.

Im Ende 7 des ersten Abschnitts 6 der Stufenbohrung 3 befindet sich eine Feder 23, die den Schließkolbenteil 15 in einer Richtung beaufschlagt, in der er durch Zusammenarbeit seines Stirnendes 30 mit einer Steuerkante 31 in der Erweiterung 29 die Verbindung vom Druckeinlaß 16 zum Druckauslaß 17 absperrt. Die Feder 23 kann in ihrer Vorspannung mittels einer Einstellvorrichtung 24 verstellt werden. Der Steuerkolbenteil 12 begrenzt mit dem verlängernden Kolbenteil 13 im zweiten Abschnitt 4 eine Ringkammer 25, in der der Steuerkolbenteil 12 an einer Ringfläche 26 beaufschlagbar ist. Die gegenüberliegende Stirnfläche 27 des Steuerkolbenteils 12 wird vom Druck in der Steuerkammer 10 beaufschlagt.

Der zwischen dem Kolbenteil 13 und dem Schließkolbenteil 15 liegende Teil des ersten Abschnittes 6 der Stufenbohrung 3 steht über einen Kanal 32 mit der Ringkammer 25 ständig in druckübertragender Verbindung. Gegebenenfalls ist im Kanal 32 eine, vorzugsweise einstellbare, Drosselstelle 33 vorgesehen.

Aus der Ringkammer 25 führt bei dieser Ausführungsform ein Entlastungskanal 34 zum Ende 7 des ersten Abschnittes 6, der in Abhängigkeit von der Hubstellung des Differentialkolbens 11 freigebbar ist. Der Entlastungskanal 34 hat einen Durchgangsquerschnitt, der größer ist, als der Durchgangsquerschnitt des Kanals 32 bzw. der Drosselstelle 33. Im einzelnen besteht der Entlastungskanal 34 aus radialen Stichbohrungen 34a vom Außenumfang des Kolbenteils 13 zu einer zentralen Längsbohrung 34b, sowie aus radialen Stichbohrungen 34c im Schließkolbenteil 15. Die Stichbohrungen 34 besitzen ihre Mündungen 35 in der Umfangsfläche des Schließkolbenteils 15, wobei die Mündungen 35 von der im Ende 7 liegenden Stirnseite des Schließkolbenteils 15 soweit beabstandet sind, daß der Abstand $s_1$ zwischen der Steuerkante 8 und den Mündungen 35 in etwa dem Maß S zwischen den Steuerkanten bzw. Steuerflächen 31 und 30 entspricht. Dies bedeutet, daß bei einer Bewegung des Differentialkolbens in Fig. 1 nach unten, d.h. in Richtung zur Durchgangsstellung, die Mündungen 35 dann zum Ende 7 hin offen sind, wenn die Steuerfläche 30 des Schließkolbenteils 15 die Steuerkante 31 passiert hat und die Verbindung vom Druckeinlaß zum Druckauslaß 17 freigibt. Dann wird, da der Durchgangsquerschnitt des Entlastungskanals 34 größer als der Durchgangsquerschnitt des Kanals 32 ist, die Ringkammer 25 schlagartig druckentlastet. Das Ende 7 des ersten Abschnitts ist entweder direkt oder über einen Umgehungskanal mit einem Reservoir R bzw. dem Druckauslaß 17 verbunden.

Das Schaltventil 1 arbeitet wie folgt:

In drucklosem Zustand hält die Feder 23 den Differentialkolben oben, so daß der Schließkolbenteil 15 seine Sperrstellung einnimmt. Der Druckeinlaß 16 ist vom Druckauslaß 17 getrennt. Sobald nun die Druckleitung 18 mit Druck beaufschlagt wird, öffnet das Rückschlagventil 20 und steigt der Druck zwischen dem Kolbenteil 13 und dem Schließkolbenteil 15 an. Der sich in der Druckleitung 19 aufbauende Druck wirkt über den Kanal 21 auch in der Steuerkammer 10 auf die Stirnfläche 27 des Steuerkolbenteils 12. Gleichzeitig baut sich über dem Kanal 32 in der Ringkammer 25 ein Druck auf. Der Entlastungskanal 34 ist abgesperrt. Durch die Wahl des Größenunterschiedes zwischen der Stirnfläche 27 und der Ringfläche 26 sowie der Kraft der Feder 23 ist eine obere Druckgrenze für den Verbraucher A festgelegt, an der die Kraft auf der Stirnfläche 27 die Kräfte auf der Ringfläche 26 und der Feder 23 überwiegt und den Differentialkolben 11 nach unten verschiebt. Sobald die Mündungen 35 die Steuerkante 8 passieren, wird die Ringkammer 25 schlagartig druckentlastet. Der Druck auf der Stirnfläche 27 verschiebt dann den Differentialkolben 11 dann schlagartig nach unten, bis eine relativ ungedrosselte Strömungsverbindung zwischen dem Druckeinlaß 16 und dem Druckauslaß 17 frei ist. Infolge des dann rasch absinkenden Drucks in der Druckleitung 19 schließt das Rückschlagventil 20 und hält den Druck am Verbraucher auch bei geringem Druck am Druckeinlaß 16.

Sinkt der Druck im Verbraucherkreis bis auf eine untere Druckgrenze, die wiederum durch das Größenverhältnis zwischen der Stirnfläche 27 und der Ringfläche 26 sowie der Kraft der Feder 23 bestimmt ist, dann verschiebt der Druck auf der Ringfläche 26 gemeinsam mit der Kraft der Feder 23 den Differentialkolben 11 nach oben, bis die Steuerkanten 30, 31 einander passieren und den Druckeinlaß 16 vom Druckauslaß 16 trennen. Gleichzeitig oder nahezu gleichzeitig werden auch die Mündungen 35 die Steuerkante 8 passieren und verschlossen, so daß sich in der Ringkammer 25 ein Druck aufbaut, der die Kraft der Feder 23 unterstützt und den Differentialkolben 11 schlagartig zumindest soweit nach oben verschließt, daß zwischen den Steuerkanten bzw.Steuerflächen 30, 31 eine positive Überdeckung eintritt. Danach wird über das sich öffnende Rückschlagventil 20 der Druck zum Verbraucher wieder bis an die vorerwähnte obere Druckgrenze angehoben, ehe der Differentialkolben 11 wieder nach unten verfährt und das Rückschlagventil 20 sperrt.

Auch bei extrem langsamen Annäherungen an die obere bzw.untere Druckgrenze des Verbraucherdrucks ergibt sich eine schlagartige Bewegung des Differentialkolbens 11, so daß instabile Schaltstellungen des Differentialkolbens 11 zuverlässig vermieden werden.

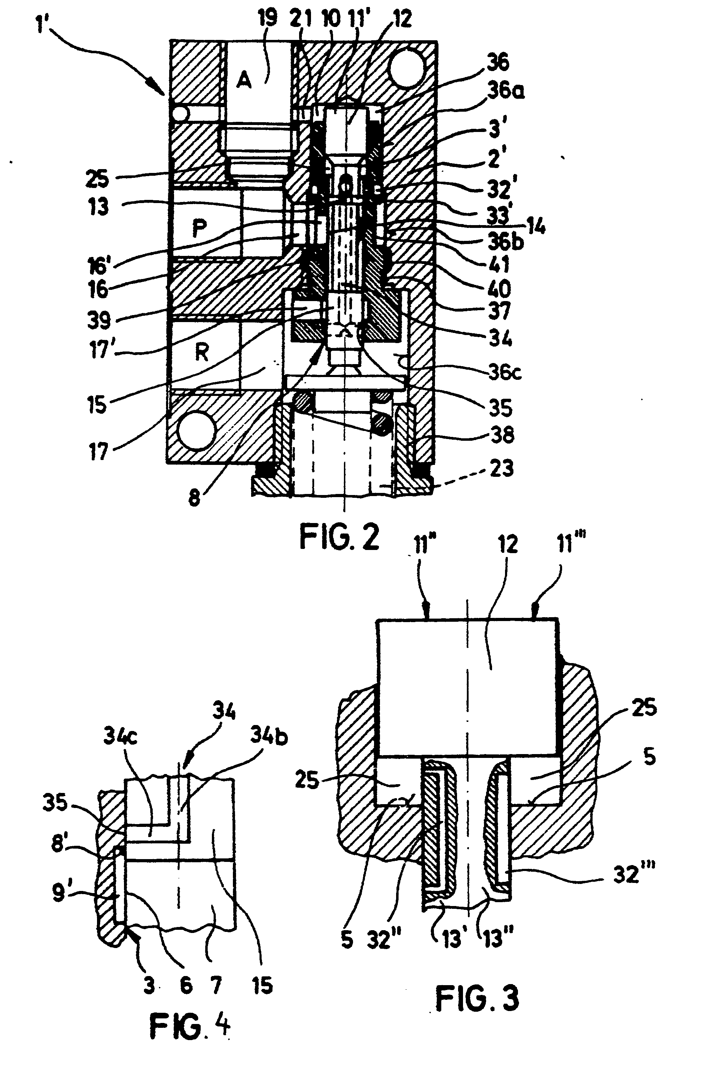

Bei der Ausführungsform der Figur 2, die im Grundzug der von Fig.1 entspricht, ist im Gehäuse 2′ eine Stufenbohrung 36 mit einem ersten Abschnitt 36b, einem zweiten kleindurchmessrigeren Abschnitt 36a und einer Aufweitung 36c vorgesehen, in die in einem Gewindeabschnitt 37 eine Zylinderhülse 39 mit einem Gewinde 40 eingeschraubt ist. In das untere Ende der Stufenbohrung 36 ist ein Federgehäuse 38 eingeschraubt, das die Feder 23 aufnimmt. In der Zylinderhülse 39 ist die den Differentialkolben 11′ aufnehmende, eigentliche Stufenbohrung 3′ ausgebildet, die jedoch oben und unten offen ist, so daß der Steuerkolbenteil 12 oben und der Schließkolbenteil 15 unten herausragen.

Vom Druckeinlaß 16 im Gehäuse 2′ führt ein Druckeinlaß 16′ zur Ringkammer im Bereich der Eindrehung 14 zwischen dem Kolbenteil 13 und dem Schließkolbenteil 15. Im unteren Ende der Zylinderhülse 39 ist ein Druckauslaß 17′ zur Stufenbohrung 3′ vorgesehen, der mit dem Druckauslaß 17 des Gehäuses 2′ in Verbindung steht. An der unteren Stirnseite der Zylinderhülse 39 ist die Steuerkante 8 für die Mündungen 35 des Entlastungskanals 34 ausgebildet. Der Abschnitt 36b der Stufenbohrung 36 bildet einen Ringraum 41, der mit dem Druckeinlaß 16 in Verbindung steht. Aus dem Ringraum 41 führt der ständig offene Kanal 32′ zur Ringkammer 25. Im Kanal 32′ ist eine Drosselstelle 33′ angeordnet, derart, daß der Durchgangsquerschnitt durch den Kanal 32′ kleiner ist als der Durchgangsquerschnitt durch den Entlastungskanal 34. Der Kolbenteil 13 ist hier als in Längsrichtung des Differentialkolbens 11′ schmaler Bund ausgebildet. Die Zylinderhülse 39 ist in üblicher Weise in der Stufenbohrung 36 abgedichtet, damit die Steuerkammer 10 von der Ringkammer 41 abgedichtet ist.

Das Schaltventil 1′ gemäß Fig.2 arbeitet wie das Schaltventil 1 von Fig.1.

In Fig.3 ist in der linken Hälfte eine Detailvariante dargestellt, bei der der Differentialkolben 11″ (siehe auch Fig.1) bezüglich des Kolbenteils 13′ so ausgebildet ist, daß der ständig offene Kanal 32″ im Inneren des Kolbenteils 13′ verläuft und in einer solchen Länge ausgebildet ist, daß die Verbindung zur Ringkammer 25 ständig offen ist.

In der rechten Hälfte der Fig.3 ist der Kanal 32″ als Längsnut im Außenumfang des Kolbenteils 13″ des Differentialkolbens 11″ ausgebildet, um die Ringkammer 25 ständig mit dem Druckeinlaß (hier nicht gezeigt) zu verbinden. Denkbar wäre es, hier mehrere in Umfangsrichtung verteilte Längsnuten mit kleinem Querschnitt vorzusehen, die in ihrer Gesamtheit den Kanal 32″ bilden. Der Entlastungskanal 34 ist in Fig.3 nicht gezeigt.

Gemäß Fig.4 ist zur vereinfachten Herstellung der Stufenbohrung 3 diese in ihrem ersten Abschnitt 6 mit gleichbleibendem Durchmesser ausgebildet. Die zum Aufsteuern der Mündung 35 des Entlastungskanals 34 notwendige Steuerkante 8′

wird von einer Längsausnehmung 9′ in der Wand des ersten Abschnitts 6 der Stufenbohrung 3gebildet, die zum Ende 7 des ersten Abschnitts 6 hin offen ist.

## Patentansprüche

1. Schaltventil (1,1′) mit hydraulischer Selbsthaltung, mit einer einen Differentialkolben (11, 11′, 11″, 11‴) enthaltenden Gehäuse-Stufenbohrung (3, 3′), die in ihrem kleindurchmessrigen ersten Abschnitt (6) Teil des Strömungsweges von einem Druckanschluß (16, 16′) zu einem Druckauslaß (17, 17′) ist und in ihrem großdurchmessrigen zweiten Abschnitt (4) den Steuerkolbenteil (12) des Differentialkolbens aufnimmt, der mit einem abgesetzten Kolbenteil (13, 13′, 13″) in den ersten Abschnitt (6) ragt und eine dazwischenliegende Ringkammer (25) begrenzt, mit einem mit dem Kolbenteil (13, 13′, 13″) verbundenen Schließkolbenteil (15), der zwischen einer Absperrstellung, in der er den Druckanschluß vom Druckauslaß trennt, und einer Durchgangsstellung, in der der Druckanschluß mit dem Druckauslaß verbunden ist, hin-und herschiebbar ist, mit einer den Schließkolbenteil (15) in Absperrichtung beaufschlagenden Feder (23) im druckentlasteten Ende (7) des ersten Abschnitts (6), mit einer zum Druckanschluß (16, 16′) führenden und zu einem Verbraucher (A) fortgesetzten Druckleitung (18, 19), mit einem von der Druckleitung zu einer Steuerkammer (10) für den Steuerkolbenteil (12) führenden Kanal (21), mit einer Überströmverbindung vom Druckanschluß (16, 16′) zur Ringkammer (25) und mit einem vom Hub des Differentialkolbens abhängig freigebbaren Entlastungskanal (34) aus der Ringkammer (25), **dadurch gekennzeichnet, daß** die Überströmverbindung ein ständig offener Kanal (32, 32′, 32″, 32‴) ist, dessen Durchgangsquerschnitt kleiner als der Durchgangsquerschnitt des Entlastungskanals (34) ist.

2. Schaltventil nach Anspruch 1, **dadurch gekennzeichnet,** daß der Kanal (32) im Gehäuse (2) angeordnet ist.

3. Schaltventil nach Anspruch 1, **dadurch gekennzeichnet,** daß die Stufenbohrung (3′) in einer im Gehäuse (2′) festgelegten Zylinderhülse (39) angeordnet ist, daß der Kanal (32′) von einem an der Außenseite der Zylinderhülse (39) im Gehäuse (2′) begrenzten Ringraum (41) durch die Wand der Zylinderhülse zur Ringkammer (25) führt, und daß der Ringraum (41) mit dem Druckanschluß (16) verbunden ist.

4. Schaltventil nach Anspruch 1, **dadurch gekennzeichnet,** daß der Kanal (32″, 32‴) im Kolbenteil (13′, 13″) angeordnet ist.

5. Schaltventil nach wenigstens einem der Ansprüche 1 bis 4, **dadurch gekennzeichnet, daß** der Entlastungskanal (34) vom Außenumfang des Kolbenteils (13) ausgehend im Inneren des Differentialkolbens (11) bis in den Schließkolbenteil (15) geführt ist und an dessen Außenumfang ausmündet, und daß im druckentlasteten Ende (7) des ersten Abschnitts (6) der Stufenbohrung (3) eine eine Steuerkante (8) für die Mündung (35) des Entlastungskanals (34) bildende Aussparung (9, 9′) vorgesehen ist.

6. Schaltventil nach Anspruch 5, **dadurch gekennzeichnet,** daß die Aussparung (9) eine umlaufende Erweiterung im ersten Abschnitt (6) ist.

7. Schaltventil nach wenigstens einem der Ansprüche 1 bis 6, **dadurch gekennzeichnet,** daß in der Druckleitung (18, 19) zwischen dem Druckanschluß (16) und dem Kanal (21) ein zum Druckanschluß (16) sperrendes Rückschlagventil (20) angeordnet ist.

## Revendications

1 Valve de commutation (1, 1′) à auto-maintien hydraulique, comportant un alésage étage de carter (3, 3′), contenant un piston différential (11, 11′, 11″, 11‴), qui constitue dans sa première section (6), de petit diamètre, une partie du trajet d'écoulement un raccordement de pression (16, 16′) allant vers un échappement de pression (17, 17′) et qui loge dans sa deuxième section (4), de grand diamètre, la partie de commande (12) du piston différentiel dont une partie de piston (13, 13′, 13″) en retrait pénètre dans la première section (6) et y délimite une chambre annulaire (25) intermédiaire, avec une partie de fermeture (15) du piston, reliée à la partie de piston (13, 13′, 13″, qui est susceptible de se déplacher en avant et en arrière, entre une position d'isolation dans laquelle elle sépare le raccordement de pression de l'échappement de pression, et une position de passage, dans laquelle le raccordement de pression est relié à l'échappement de pression, avec un ressort (23) chargeant la partie de fermeture de piston (15) dans le sens de l'isolation et situé à l'éxtrémité (7) déchargée de pression de la première section (6), avec une conduite de pression (18, 19) menant au raccordement de pression (16, 16′) et continuant vers un consommateur (A), avec un canal (21) menant de la conduite de pression à une chambre de commande (10) pour la partie de commande de piston (12), avec une liaison de surcharge allant du raccordement de pression (16, 16′) à la chambre annulaire (25) et avec un canal de décharge (34) de la chambre annulaire (25) qui est susceptible d'être ouvert en fonction de la course du piston différentiel, caractérisé en ce que la liaison de surcharge est un canal (32, 32′, 32″, 32‴) qui est constamment ouvert, dont la section transversale de passage est inférieure à la section transversale de passage du canal de décharge (34).

2. Valve de commutation selon la revendication 1, caractérisée en ce que le canal (32) disposé dans le carter (2).

3. Valve de commutation selon la revendication 1, caractérisée en ce que l'alésage étagé (3′) est disposé dans une douille cylindrique (39) fixée dans le carter (2′), en ce que le canal (32′) mène d'un espace annulaire (41) délimité dans le carter (2′), sur la face extérieure de la douille cylindrique (39), à la chambre annulaire (25), en passant dans la paroi de la douille cylindrique, et en ce que l'espace annulaire (41) est relié au raccordement de pression (16).

4. Valve de commutation selon la revendication 1, caractérisée en ce que le canal (32″, 13‴) est disposé dans la partie de piston (32′, 32″).

5. Valve de commutation selon au moins l'une des revendications 1 à 4, caractérisée en ce que le canal de décharge (34) part de la périphérie extérieure du piston différentiel (11), arrive jusque dans la partie de fermture de piston (15) et débouche sur sa périphérie extérieure, et en ce que, dans l'extrémité (7) déchargée de pression de la première section (6) de l'alésage étagé (3), il est prévu un évidement (9, 9') formant une arête de commande (8) pour l'embouchure (35) du canal de décharge (34).

6. Valve de commutation selon la revendication 5, caractérisée en ce que l'évidement (9) est un élargissement circulaire ménagé dans la première section (6).

7. Valve de commutation selon au moins l'une des revendications 1 à 6, caractérisée en ce qu'une soupape anti-retour (20) constituant un blocage en direction du raccordement de pression (16) est disposée dans la conduite de pression (18, 19), entre le raccordement de pression (16) et le canal (21).

**Claims**

1. A hydraulically self-holding on/off valve (1, 1') having: a stepped bore (3, 3') in the body, such bore receiving a differential piston (11, 11', 11", 11‴) and being in its small-diameter first part (6) part of the flow path from a pressure inlet (16, 16') to a pressure outlet (17, 17') and receiving in its large-diameter second part (4) the pilot piston part (12) of the differential piston, the pilot piston extending by way of a reduced piston part (13, 13', 13") into the first part (6) of the stepped bore and bounding an annular chamber (25) between them; a main piston part (15) which is connected to the reduced piston part (13, 13', 13") and which is reciprocable between a shutoff position, in which it separates the pressure inlet from the pressure outlet, and an open position, in which the pressure inlet is in communication with the pressure outlet; a spring (23) which is disposed in the pressure-relieved end (7) of the first part (6) of the stepped bore and which acts on the main piston (15) in the shutoff direction; a delivery line (18, 19) which extends to the pressure inlet (16, 16') and to a consumer (A); a duct (21) which extends from the delivery line to a pilot chamber (10) for the pilot piston part (12); an overflow connection from the pressure inlet (16, 16') to the annular chamber (25); and a relief duct (34) which extends from the annular chamber (25) and which is adapted to open in dependence upon the stroke of the differential piston, characterised in that the overflow connection is a continuously open duct (32, 32', 32", 32‴) whose passage cross-section is smaller ethan the passage cross-section of the relief duct (34).

2. A valve according to claim 1, characterised in that the duct (32) is disposed in the valve body (2).

3. A valve according to claim 1, characterised in that the steped bore (3') is disposed in a cylinder liner (32) secured in the valve body (2'), the duct (32') extends from an annular chamber (41), bounded on the outside of the liner (39) in the casing (2'), through the liner wall to the annular chamber (25), and the annular chamber (41) is connected to the pressure inlet (16).

4. A valve according to claim 1, characterised in that the duct (22", 22‴) is disposed in the reduced piston part (13', 13").

5. A valve according to at least one of claims 1–4, characterised in that the relief duct (34), starting from the outer periphery of the reduced piston part (13), extends inside the differential piston (11) into the main piston part (15) and issues on the outer periphery thereof, and in the pressure-relieved end (7) of the first part (6) of the stepped bore (3) there is a recess (9, 9') which merges into a control edge (8) for the outlet (35) of the relief duct (34).

6. A valve according to claim 5, characterised in that the recess (9) is in the form of a peripheral widening in the first part (6) of the stepped bore (3).

7. A valve according to at least one of claims 1–6, characterised in that a check valve (20) which shuts off towards the pressure inlet (16) is disposed in the delivery line (18, 19) between the pressure inlet (6) and the duct (21).

EP 0 306 632 B1

FIG.1

## FIG. 2

## FIG. 3

## FIG. 4